# EUROPEAN PATENT APPLICATION

(11) **EP 4 817 723 A1**
(43) Date of publication of application: **07.10.2026**
(21) Application number: 26170971.1
(22) Date of filing: 24.05.2023
(51) Int. Cl.: B01D 61/14

(54) **CONTINUOUS TANGENTIAL FLOW FILTRATION SYSTEM**

(30) Priority: 26.05.2022 US 202263345942 P
(62) Document number(s) of the earlier application(s) in accordance with Art. 76 EPC: 23734432.0 / 4 532 086
(71) Applicant: Eli Lilly and Company, Indianapolis, IN 46285 (US)
(72) Inventor: CHEN, Yamei, Indianapolis, 46206-6288 (US); FISHER, Cyrus Alonzo, Indianapolis, 46206-6288 (US); MOOMAW, John Fletcher, Indianapolis, 46206-6288 (US); PATERSON, Benjamin Lewis, Indianapolis, 46206-6288 (US); SALUPO, Vincent Paul, Indianapolis, 46206-6288 (US); WILKSTEIN, Katerina Marie, Indianapolis, 46206-6288 (US)
(74) Representative: J A Kemp LLP

(57) **Abstract**

Tangential flow filtration systems and, more specifically, continuous tangential flow filtration ("cTFF") systems comprised of single-pass modules are disclosed herein. Each single-pass module is configured to transition from a first process configuration to a second process configuration and/or operate under both the first process configuration and the second process configuration for customization of the cTFF system. Each of the modules has at least one break tank for regulation of flow and pressure throughout the module and, on a larger scale, the cTFF system.

## Description

### FIELD OF THE DISCLOSURE

The present disclosure relates to tangential flow filtration systems and, more specifically, to continuous tangential flow filtration ("cTFF") systems comprised of single-pass modules having more than one process configuration and at least one break tank for flow and pressure control.

### BACKGROUND OF THE DISCLOSURE

Conventional pharma and biopharma manufacturing processes require a series of discrete batch operations arranged in a downstream configuration. For example, conventional systems may include instances of column chromatography, viral inactivation, viral filtration, tangential flow filtration, final filtration, and storage and shipping. Each of these operations may further require their own subset of operations. For example, a conventional way of completing tangential flow filtration is via batch tangential flow filtration (bTFF), which requires recirculation of feed material through the same filter multiple times. This is done to either increase a concentration of a solute of interest within a solution and/or to achieve a desired solution composition through diafiltration, in which a solute of interest is transitioned from a starting solution matrix into an exchange buffer. Such processes require several recirculation passes and can result in inefficiency of the system.

Continuous tangential flow filtration strategies may include using single-pass tangential flow filtration ("spTFF") as a concentration operation and counter-current buffer exchange tangential flow filtration ("CCBE-TFF") as a diafiltration operation, which enables continuous tangential flow filtration that can be used to accomplish the same processing outcomes as bTFF. For example, spTFF can accomplish the same desired concentration in a single pass across a filter rather than requiring several, and even hundreds, of passes across the filter. With addition of multiple continuous concentration steps in series and collated with in-line dilutions, spTFF can also be used for CCBE-TFF. However, CCBE-TFF requires multiple stages to improve efficiency, where the feed stream is continuously fed into the system and the retentate is continuously collected at the outlet through a series of dilution and concentration stages. The diafiltration buffer is supplied at the final diafiltration stage. Permeate from the final stage then serves as the diafilterant for the preceding stage, resulting in a flow "counter-current" to the feed stream. However, CCBE-TFF processes come with their own set of challenges, including complex process control, an increased number of necessary pumps and other instrumentation, and a greater requirement for surface area relative to traditional bTFF systems. Further, the requirement of serial stages presents process control challenges, including, but not limited to, unstable flow rates, system overpressure, undesired mixing, tightly coupled flow control loops between stages, and complex start-up and shut down procedures, which further complicates situations requiring a disturbance response, where restart of the system is necessary, resulting in further inefficiencies.

### SUMMARY

The present disclosure relates to tangential flow filtration systems and, more specifically, to continuous tangential flow filtration ("cTFF") systems comprised of single-pass modules configured to transition from a first process configuration to a second process configuration and/or operate under both the first process configuration and the second process configuration for customization of the cTFF system. Each of the modules has at least one break tank for regulation of flow and pressure throughout the module and, on a larger scale, the cTFF system.

In a first aspect of the disclosure, a tangential flow filtration module is described. The module comprises a flow supply comprising a module exchange buffer supply and a module feed supply; a feed break tank positioned downstream of the flow supply, the feed break tank including a powered agitator; and a first filter positioned downstream of the feed break tank.

In another aspect of the disclosure, a tangential flow filtration module is described. The module comprises a flow supply comprising a module exchange buffer supply and a module feed supply; a filter positioned downstream of the flow supply and having two outputs, including a permeate output and a retentate output; and a permeate break tank positioned downstream of the filter and supplied by the permeate output of the filter.

In yet another aspect of the disclosure, a tangential flow filtration system is described. The tangential flow filtration system comprises a plurality of individual modules, each of said individual modules configured to perform a process associated with tangential flow filtration, wherein each individual module includes a plurality of valves and a control system. Actuation of the plurality of valves is configured to alter a flow path of the corresponding individual module. The control system is configured to calculate a current stage removal factor for the individual module and automatically operate the plurality of valves to alter the flow path so that the current stage removal factor for the individual module approaches a target stage removal factor. The current stage removal factor is a ratio between any two of a permeate flow rate, a feed flow rate, and a retentate flow rate for the individual module.

In another aspect of the disclosure, a tangential flow filtration system is described. The system comprises a plurality of modules, each module comprising a module flow supply; a filter positioned downstream of the module flow supply; and at least one of a feed break tank positioned between the module flow supply and the filter and a permeate break tank positioned downstream of the filter.

In various aspects of the disclosure, the module may further comprise a feed pump positioned between the feed break tank and the first filter. The feed pump may be configured to control a flow rate of a flow between the feed break tank and the first filter.

In various aspects of the disclosure, operation of the powered agitator is configured to create a homogenous solution.

In various aspects of the disclosure, the feed break tank may define an air gap.

In various aspects of the disclosure, the feed break tank may define a vent in fluid communication with ambient pressure.

In various aspects of the disclosure, a permeate break tank may be positioned downstream of the first filter.

In various aspects of the disclosure, the module exchange buffer supply may be comprised of permeate of a second filter positioned downstream of the first filter, a feed supply of the second filter comprising retentate of the first filter.

In various aspects of the disclosure, the module feed supply is comprised of retentate of a third filter positioned upstream of the first filter.

In various aspects of the disclosure, a feed break tank may be positioned between the flow supply and the filter.

In various aspects of the disclosure, an interior of the permeate break tank may define an air gap.

In various aspects of the disclosure, the permeate break tank may include a vent in fluid communication with ambient pressure.

In various aspects of the disclosure, a valve may be positioned between the first filter and the permeate break tank. The valve may be configured to control permeate pressure on the permeate side of the first filter.

In various aspects of the disclosure, the permeate break tank may supply a second filter positioned upstream of the feed supply. The feed supply may be comprised of retentate of the second filter.

In various aspects of the disclosure, the module exchange buffer supply may be comprised of permeate of a third filter positioned downstream of the first filter, a feed supply of the third filter comprising retentate of the first filter.

In various aspects of the disclosure, the module may comprise at least one valve, wherein operation of the valve is configured to change a configuration of the tangential flow filtration module from a first flow path configuration to a second flow path configuration or a configuration of the tangential flow filtration module from the second flow path configuration to a first flow path configuration. The first flow configuration may be a counter-current buffer exchange flow path configuration. The second flow configuration may be a single-pass tangential flow filtration flow path configuration.

In various aspects of the disclosure, the plurality of individual modules may include at least five modules.

In various aspects of the disclosure, a last individual module of the plurality of individual modules may have a different target stage removal factor than at least one other individual module of the plurality of individual modules.

In various aspects of the disclosure, the control system may be configured to maintain the tangential flow filtration system in a steady state in which the current stage removal factor approaches the target stage removal factor. The system may be configured to allow a user to adjust, when the tangential flow filtration system is in the steady state, at least one valve of the plurality of valves in a way that causes the current stage removal factor to diverge from the target stage removal factor. The control system may be configured to automatically operate remaining valves of the plurality of valves to compensate for the user's adjustment such that the current stage removal factor again approaches the target stage removal factor after the user's adjustment. Each of the plurality of individual modules may comprise a feed break tank positioned downstream of a flow supply and upstream of the filter for the individual module and a permeate break tank positioned downstream of the filter. The flow supply may comprise a module feed supply and a module exchange buffer supply. A first flow rate output of the feed break tank and a second flow rate output of the permeate break tank may be individually adjustable during operation of the tangential flow filtration system. The control system may be configured to maintain the tangential flow filtration system in a steady state by automatically maintaining a substantially constant stage removal factor during adjustment of either of the first flow rate output or the second flow rate output. The control system may be further configured to maintain a constant level within the feed break tank and a constant level within the permeate break tank.

In various aspects of the disclosure, each module may have at least one of a first configuration corresponding to a single-pass tangential flow filtration ("spTFF") process, a second configuration corresponding to a counter-current buffer exchange tangential flow filtration ("CCBE-TFF") process, and a third configuration corresponding to a combined spTFF and CCBE-TFF process. Each module of the plurality of modules may include a plurality of valves so that each module of the plurality of modules is capable of selectively switching form the first configuration to at least one of the second configuration and the third configuration, selectively switching from the second configuration to at least one of the first configuration and the third configuration, and selectively switching form the third configuration to at least one of the first configuration and the second configuration. A first module of the plurality of modules may be in the first configuration and a second module of the plurality of modules may be in the second configuration. A first plurality of modules including the first module may be in the first configuration and a second plurality of modules including the second module may be in the second configuration. A last module of the plurality of modules may be operated in the third configuration. At least some permeate from the last module may be supplied to a module exchange buffer supply for another module upstream to the last module, and at least some permeate from the last module may be sent to waste.

In various aspects of the disclosure, each module of the plurality of modules may include a retentate flow path and a permeate flow path. The permeate break tank may be positioned along the permeate flow path.

In various aspects of the disclosure, the system may comprise at least five modules.

In various aspects of the disclosure, a first module of the plurality of modules includes a system feed supply. A last module of the plurality of modules includes a system buffer exchange supply.

In various aspects of the disclosure, the system may be configured to operate as a diafiltration system that transfers a solute of interest from within a feed supply from a starting solution matrix into an exchange buffer. The system may be configured to flush the filter of each module with the exchange buffer before starting to filter the feed supply.

In various aspects of the disclosure, the system may be configured to compensate for outputting product during system start-up with a concentration that is lower than process requirements by outputting product during steady-state with a concentration that is higher than process requirements, such that a mixture of product output during start-up and product output during steady-state has a concentration that meets the process requirements.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The above-mentioned and other features and advantages of this disclosure, and the manner of attaining them, will become more apparent and will be better understood by reference to the following description of embodiments of the invention taken in conjunction with the accompanying drawings, wherein:
FIG. **1** is a diagrammatic illustration of a continuous tangential flow filtration ("cTFF") system comprised of substantially similar modules;
FIG. **2** is a diagrammatic illustration of a module of the cTFF system of FIG. **1****;**
FIG. **3** is a series of graphical illustrations of various monitoring parameters for assessing a steady-state operation of experimental cTFF system modules conducting CCBE-TFF or buffer exchange processes;
FIG. **4** is a series of graphical illustrations of various monitoring parameters for assessing a steady-state operation of an experimental cTFF module conducting CCBE-TFF and spTFF secondary concentration processes simultaneously; and
FIG. **5** is a graphical illustration of a region of pressure dependence relative to permeate flux and retentate concentration and a region of less pressure dependence relative to permeate flux and retentate concentration.

Corresponding reference characters indicate corresponding parts throughout the several views. The exemplifications set out herein illustrate exemplary embodiments of the invention and such exemplifications are not to be construed as limiting the scope of the invention in any manner.

### DETAILED DESCRIPTION

For the purpose of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates. One embodiment of the invention is shown in great detail, although it will be apparent to those skilled in the relevant art that some features that are not relevant to the present invention may not be shown for the sake of clarity.

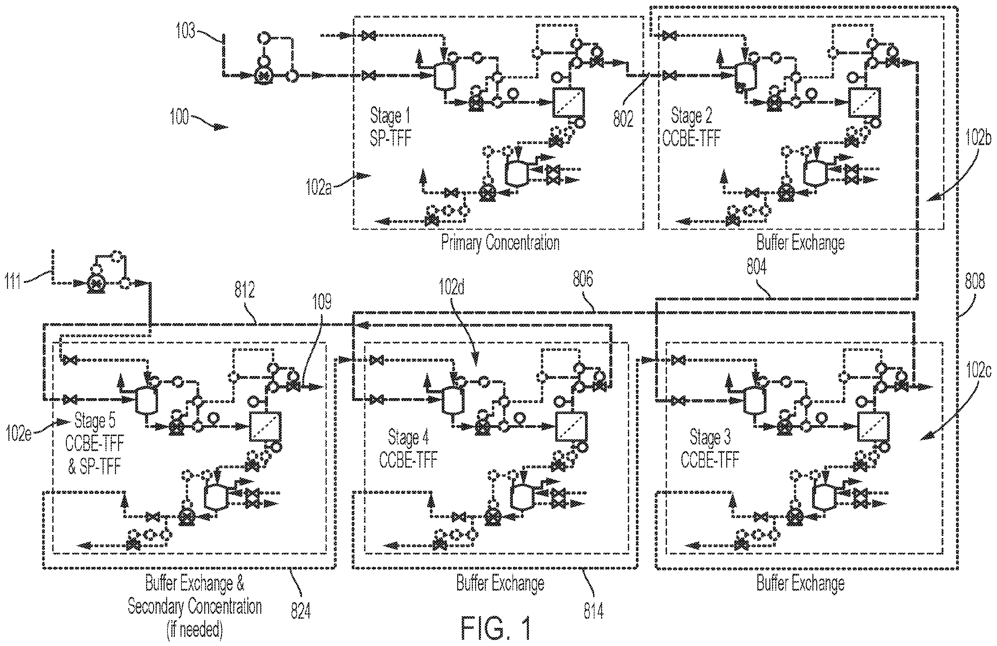

FIG. **1** provides a diagrammatic illustration of a fully integrated continuous tangential flow filtration ("cTFF") system **100.** The cTFF system **100** accepts as input a system feed supply **103** and outputs a finished system product **109.** Optionally, the cTFF system **100** also accepts as input a system exchange buffer supply **111.** The system feed supply **103** may include a solute of interest, such as a monoclonal antibody (mAB), suspended within a starting solution matrix. The cTFF system **100** may operate to increase a concentration of the solute of interest within the finished system product **109.** The cTFF system **100** may operate as a diafiltration system, in which the solute of interest is transferred from the starting solution matrix into the exchange buffer. When operated as a diafiltration system, the finished system product **109** may comprise the solute of interest suspended within the exchange buffer supplied at **109,** instead of the starting solution matrix. In some embodiments, the cTFF system may operate to both transfer the solute of interest to the exchange buffer, as well as to increase the concentration of the solute of interest in the finished system product.

The cTFF system **100** may include a plurality of modules **102,** wherein each module **102** has substantially the same operating structure as the remaining modules described further herein, including a number of valves and/or other instrumentation allowing for a change in flow path configuration for the carrying out of various processes. As illustrated, the cTFF system **100** includes five modules **102;** however, other embodiments may include a greater or a fewer number of modules **102** to carry out the processes as described.

Each of the modules **102** may be configured for performance of a tangential flow filtration process. As illustrated, a first module **102a** is configured for performing a primary concentration function using single-pass tangential flow filtration ("spTFF"); a final module **102e** is configured for performing a secondary concentration function using spTFF, if needed, in tandem with a counter-current buffer exchange tangential flow filtration ("CCBE-TFF") process; and a second module **102b,** a third module **102c,** and a fourth module **102d,** are each configured for performing CCBE-TFF. As noted above, each module **102** has substantially the same operating structure. Each module **102** may be configured to complete different processes by closing or opening certain on or off valves within the module **102.** As such, each module **102** may be readily operated in either configuration. Accordingly, the cTFF system **100** can be arranged with any number of modules as desired, wherein each module **102** may be configured for the same or different processes as desired.

For example, in other embodiments, the cTFF system **100** may include six modules **102,** where the second module, the third module, the fourth module, and the fifth module are each configured for performing CCBE-TFF, while the sixth module is configured for performing a secondary concentration function using spTFF. Other embodiments are available which allow for the optimization of the system **100** for a specific process objective by using a fewer or greater number of modules **102** and configuring each module for a process accordingly (e.g., spTFF, CCBE-TFF, a combination of spTFF and CCBE-TFF, or other processes as desired).

The connections between each module **102** are also illustrated in FIG. **1****.** For example, a retentate output of the first module **102a,** or the primary concentration stage using an spTFF process, may provide a feed or retentate supply to the second module **102b** along pathway **802** as described further herein. A retentate output of the second module **102b,** or a first buffer exchange stage, may provide a feed or retentate supply to the third module **102c** along pathway **804.** A retentate output of the third module **102c,** or a second buffer exchange stage, may provide a feed or retentate supply to the fourth module **102d** along pathway **806,** while a permeate output of the third module **102c** may provide a permeate or diafiltration buffer supply to the second module **102b** along pathway **808.**

The retentate output of the fourth module **102d,** or a third buffer exchange stage, may provide a feed or retentate supply to the fifth module **102e** along pathway **812,** while a permeate output of the fourth module **102d** may provide a permeate or diafiltration buffer supply to the third module **102c** along pathway **814.** A retentate output of the fifth module **102e,** which may serve as a fourth buffer exchange stage and/or a secondary concentration stage, is collected as product, while a permeate output of the fifth module **102e** provides a permeate supply to the fourth module **102d** along pathway **824.** The flow rate control of each pathway is discussed further herein.

The system feed supply **103** may be supplied to the first module **102a.** The final product **109** may be collected from the last module, i.e., fifth module **102e.** When the cTFF system is operated as a diafiltration system, exchange buffer may also be provided to the final module, i.e., fifth module **102e,** as described in further detail below.

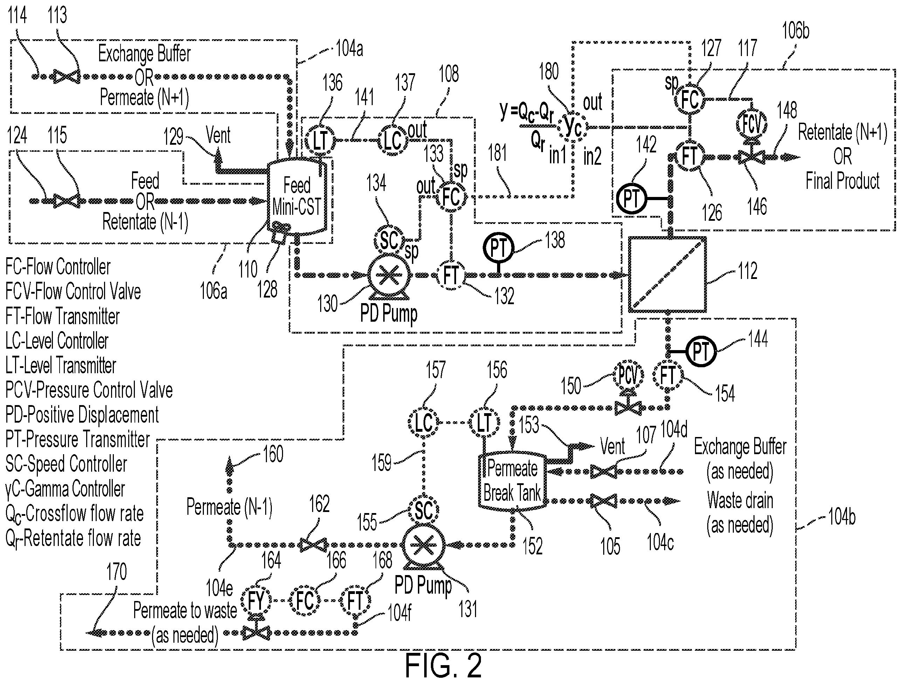

FIG. **2** is a diagrammatic illustration of a module **102,** its components, and the connections therebetween. Flow path **104** (including flow paths **104a** and **104b,** which may also include flow paths **104c, 104d, 104e,** and/or **104f)** illustrates a permeate pathway, flow path **106** (including flow paths **106a** and **106b)** illustrates a retentate and/or feed pathway, and flow path **108** illustrates a feed pathway between a first break tank, or **110,** and a filter **112,** as further discussed herein. For clarity, in both FIGS. 1 and 2, permeate pathways are shown by dotted lines, retentate and/or feed pathways are shown by dashed lines, while pathways between break tanks and filters are shown by dash-dot-dash lines. Each of flow paths **104, 106,** and **108** may be controlled as further disclosed herein to form at least one of a first flow path configuration associated with an spTFF process and/or a second flow path configuration associated with a CCBE-TFF process so that the first flow path configuration and the second flow path configuration may be active simultaneously or exclusively. In other words, the module **102** may be configured to perform an spTFF process and a CCBE-TFF process simultaneously or exclusively.

A first portion of flow path **104,** flow path **104a,** may start at each module **102** with a diafiltration buffer or, interchangeably, permeate supply at a first input **114,** wherein the supply source for the module **102** may be dependent on the positioning of the module **102** within the cTFF system **100** (FIG. **1****).** Where appropriate, the permeate supply or diafiltration buffer provided at the first input **114** may be provided by a downstream module **102** as described above in relation to the cTFF system **100.** First input **114** may be considered a module exchange buffer supply. Operation of a flow valve, e.g., flow control valve **113,** may prohibit or allow permeate supply flow or diafiltration buffer supply flow into flow path **104a** as desired for process configuration of the module **102.** For example, operation of the flow control valve **113** may further facilitate control of the amount of permeate supply or diafiltration buffer entering flow path **104a** to maintain a stable system **100** (FIG. **1****)** as described further herein. In other words, the flow control valve **113** may facilitate control of the flow rate of permeate supply or diafiltration buffer into the module **102** as required by the status of the module **102** and/or the system **100** (FIG. **1****).** When the flow control valve **113** is open and the flow path **104a** is active, the diafiltration buffer or permeate supply may enter the feed side break tank **110,** ending flow path **104a.** The flow rate of diafiltration buffer or permeate supply through the flow control valve **113** may relate in part to the degree at which the flow control valve **113** is opened. For example, a fully opened valve may allow a maximum flow rate, while a half-opened valve may allow about a 50% flow rate. Varying degrees of openness of the flow control valve **113** and corresponding flow rates may be used as desired for purposes of module operation.

A first portion of flow path **106,** flow path **106a,** may start at each module **102** with a feed supply or, interchangeably, retentate supply at a second input **124,** wherein the supply source for the module **102** may be dependent on the positioning of the module **102** within the cTFF system **100** (FIG. **1****).** Where appropriate, the retentate supply or feed supply provided at the second input **124** may be provided by an upstream module **102** as described above in relation to the cTFF system **100.** Second input **124** may be considered a module feed supply. Operation of a flow valve, e.g., flow control valve **115,** may prohibit or allow retentate supply flow or feed supply flow into flow path **106a** as desired for process configuration of the module **102.** For example, operation of the flow control valve **115** may further facilitate control of the amount of retentate supply or feed supply entering flow path **106a** to maintain a stable system **100** (FIG. **1****)** as described further herein. In other words, the flow control valve **115** may facilitate control of the flow rate of retentate supply or feed supply into the module **102** as required by the status of the module **102** and/or the system **100** (FIG. 1). When the flow control valve **115** is open and flow path **106a** is active, the retentate supply or feed supply enters the feed side break tank **100,** ending flow path **106a.** The flow rate of retentate supply or feed supply through the flow control valve **115** may relate in part to the degree at which the flow control valve **115** is opened. For example, a fully opened valve may allow a maximum flow rate, while a half-opened valve may allow about a 50% flow rate. Varying degrees of openness of the valve **115** and corresponding flow rates may be used as desired for purposes of module operation.

The feed break tank **110** may begin flow path **108.** The feed break tank **110** may receive fluid flow from at least one of flow path **104a** and flow path **106a.** A powered agitator **128,** such as an impeller, may be contained within the feed break tank **110** to mix the fluid to ensure a homogenous stream. The feed break tank **110** may include a vent **129** in communication with ambient pressure to allow pressure to return to and remain at ambient pressure between modules **102.** The vent **129** facilitates the ability of each module **102** to utilize the full pressure range of the filter **112,** mitigating any pressure cascade that may otherwise result throughout the cTFF system **100** (FIG. **1****).**

For example, during CCBE processes, the permeate from each stage may be re-injected into the feed stream of the preceding stage, similar to the flow paths of permeate described above in reference to FIG. **1****.** Generally, in certain embodiments not including a feed break tank **110,** the exit pressure of the permeate may be higher than the feed pressure of the preceding stage, resulting in a pressure cascade where the pressure at the final stage is the highest while the pressure at the initial stage is the lowest. The maximum pressure of the system may therefore be constrained by the pressure rating of the system. That maximum pressure of the system must be shared across all stages in the system. An increase in the number of stages may improve exchange efficiency which reduces the buffer requirements; however, with a greater number of stages, the maximum pressure of the system must be shared across a greater number of stages, resulting in less pressure available to drive permeation at each individual stage, thus limiting the effectiveness of each stage. By including feed break tank **110** and using vent **129** to stabilize the pressure within the module **102,** the pressure cascade may be mitigated.

Ideally, the retention time within the feed break tank **110** is relatively short, e.g., about 30-120 seconds. The relatively short residence time within feed break tank **110** may minimize the system time constant required to reach steady-state operation as described herein, including start-up time, shutdown time, and response time to disturbances. Properly sized break tanks may provide adequate capacity to absorb disturbances while maintaining a reasonable hold up volume. A greater or shorter retention time within the feed break tank **110** may also be considered.

A pump **130,** such as a positive displacement pump, may be positioned downstream of the feed break tank **110** to facilitate flow of the homogenous mixture from the feed break tank **110** to the filter **112.** A flow transmitter **132** may be positioned downstream of the pump **130** to measure the flow rate of the homogenous mixture from the feed break tank **110** to the filter **112.** The flow transmitter **132** may be in operable communication with a flow controller **133,** which is configured to control the flow rate according to the needed level adjustments within feed break tank **110** as communicated by a level transmitter **136** and level controller **137** as described below. The flow controller **133** is in operable communication with a speed controller **134** of the pump **130** as shown by process control loop **141,** so that the speed of the pump **130** may be adjusted as desired per the measured flow rate by the flow transmitter **132** and flow controller **133.** As used herein, process control loop **141** refers to all the dashed process control connections that interconnect level transmitter **136,** level controller **137,** flow controller **133,** speed controller **134,** and flow transmitter **132** as shown in FIG. **2****.**

The speed controller **134** may further be operably coupled to a level transmitter **136** and level controller **137,** as shown by process control loop **141,** which may be configured to work in tandem to measure and control the amount of mixture present in the feed break tank **110** to maintain said amount within a threshold range, ensuring the feed break tank **110** includes an air gap facilitating the control of pressure within the feed break tank **110** as described above. The air gap may further allow the break tank to absorb flow control disturbances and decouple flow control between the modules **102.** The speed controller **134** may adjust the speed of the pump **130** as desired per the measurements taken and provided by the level transmitter to keep the mixture level of the feed break tank **110** within the desired level as determined by the level controller **137** and flow controller **133** as described above. For example, if the level of mixture in the feed break tank **110** exceeds a ceiling threshold amount, the pump **130** may increase flow rate from the feed break tank **110** into the remaining flow path **108** and through the module **102** as described further herein. If the level of mixture in the feed break tank **110** drops below a floor threshold amount, the pump 130 may decrease the flow rate from the feed break tank **110,** thus allowing the feed break tank **110** to refill. In other embodiments, a weight transmitter (not shown) may be operably coupled to the feed break tank **110** to measure the contents of the feed break tank **110** via weight, in addition to or instead of measuring the contents via level. The weight transmitter and the level transmitter may work in tandem or separately to measure the contents of the feed break tank **110** in various embodiments.

The homogenous mixture may be pumped from the feed break tank **110** to the filter **112** as described above. A first pressure transmitter **138** may be positioned between the pump **130** and the filter **112** and configured to cooperate with a second pressure transmitter **142** and a third pressure transmitter **144** as described further herein to measure a pressure drop across the filter **112** for monitoring and optimization of filter performance.

A second portion of flow path **106,** flow path **106b,** may begin at the filter **112.** As mentioned above, the second pressure transmitter **142** may be positioned within flow path **106b** to facilitate measurement of the pressure drop across the filter **112.** A flow transmitter **126** may be positioned within flow path **106b** downstream of the filter **112** to measure the flow rate of the retentate from the filter **112.** The flow transmitter **126** may be operably coupled with a flow controller **127,** as shown by process control loop **117,** which may control a flow control valve **146** according to input received from the flow transmitter **126.** Process control loop **117** refers to all the dashed process control connections that interconnect flow controller **127,** flow control valve **146,** and flow transmitter **126.** The flow control valve **146** may also be positioned within flow path **106b** to prohibit or allow flow of retentate from the filter **112** to a first output **148** of the module **102** as desired for process configuration of the module **102.** The flow control valve **146** may facilitate control of the flow of retentate as required by the status of the module **102** and/or the system **100** (FIG. **1****)** according to the flow controller **127.** When the flow control valve **146** is open and flow path **106b** is active, the retentate may exit the module **102** at the first output **148,** ending flow path **106b.** The flow rate of retentate through the flow control valve **146** may relate in part to the degree at which the flow control valve **146** is opened. For example, a fully opened valve may allow a maximum flow rate, while a half-opened valve may allow about a 50% flow rate. Varying degrees of openness of the valve **146** and corresponding flow rates may be used as desired for purposes of module operation. The first output **148** may be in fluid communication with a feed input of another module within the cTFF system **100** (FIG. **1****),** as described above, or facilitate the collection of retentate as product.

A ratio controller, such as gamma controller **180** discussed further herein, may generally regulate flow controller **127** of process control loop **117** for retentate flow path **106b** based on flow controller **133** of process control loop **141** for filter flow path **108** as shown by process control loop **181** and described further herein.

A second portion of flow path **104,** flow path **104b,** may also begin at the filter **112.** As mentioned above, the third pressure transmitter **144** may be positioned within flow path **104b** to facilitate measurement of the pressure drop across the filter **112.** A pressure control valve **150** may also be positioned within flow path **104b**to improve the retentate flow control function as described above and described further herein under certain process conditions. A third flow transmitter **154** may be positioned between the filter **112** and the pressure control valve **150** to measure the flow rate of the permeate from the filter **112** to the permeate break tank **152.** The pressure control valve **150** may facilitate control of the permeate pressure as required by the status of the module **102** and/or the system **100** (FIG. **1****).** When the pressure control valve **150** is open and flow path **104b** is active, the permeate may enter the permeate break tank **152** as described further herein. In some embodiments, the pressure control valve **150** may be a passive control valve. The flow through the pressure control valve **150** may be determined by the overall mass balance of the system as described further herein. The permeate pressure upstream of the pressure control valve **150** may relate in part to the degree at which the flow control valve **150** is opened. For example, a fully opened valve may allow a minimum permeate pressure, while a half-opened valve may allow an elevated permeate pressure. Varying degrees of openness of the valve **150** and corresponding permeate pressures may be used as desired for purposes of module operation. The flow rate of flow path **104b,** or the permeate flow path, therefore results from the overall mass balance around the filter **112.** As such, any change to the flow rate within flow path **108** or flow path **106b** results in a responsive change in flow rate within flow path **104b** to maintain conservation of mass within the module **102.**

In some situations, the flow rate within flow path **104b** is too high relative to a target flow rate set with the gamma controller **180.** The gamma controller **180** may attempt to compensate by further opening valve **146** to divert flow from flow path **104b** to flow path **106.** However, in some instances, the valve **146** cannot be opened any further (e.g., is already fully open). In this situation, permeate pressure may be applied where manual or automated adjustment of the valve **150** may be completed by a user or control system to move the valve **150** toward a closed position, changing the dynamics within the filter **112** and forcing more flow into flow path **106b,** which allows the valve **146** to regain active control of the flow rate within flow path **104b** as discussed further herein.

The permeate break tank **152** may receive permeate flow from the filter **112** as determined by the cooperation of the first flow control valve **146** and the pressure control valve **150.** The permeate break tank **152** may serve to both collect permeate from the module **102** and be a reservoir to supply the permeate as diafiltration solution to an upstream module **102** of the cTFF system **100** (FIG. **1****)** as described above. Under ideal steady-state conditions, the level in the permeate break tank **152** may remain substantially stable as the amount of permeate that flows into the permeate break tank **152** may be substantially the same as the amount of diafilterant flowing out of the permeate break tank **152** into the next-supplied module. A level transmitter **156** may be configured to measure the amount of permeate present in the permeate break tank **152** and work in tandem with a level controller **157** to ensure said amount is within a threshold range. The threshold range of the permeate break tank **152** may facilitate inclusion of an air gap within the permeate break tank **152,** allowing the break tank to absorb flow control disturbances and decoupling flow control between the modules **120.** The permeate break tank **152** may further include a corresponding second vent **153** in fluid communication with ambient pressure to allow pressure to return to and remain at ambient pressure between modules **102,** which may be further facilitated by the air gap, for the reasons provided above in relation to feed break tank **110.**

A pump **131,** such as a positive displacement pump, may be positioned downstream of the permeate break tank **152** to facilitate flow of the permeate from the permeate break tank **152** to the second output **160** of the module **102.** The pump **131** may be operably coupled to a speed controller **155,** which may further be operably coupled to the level transmitter **156** and the level controller **157** as shown by process control loop **159.** Process control loop **159** refers to all the dashed process control connections that interconnect speed controller **155,** level controller **157,** and level transmitter **156.** The speed controller **155** may adjust the speed of the pump **131** as desired per the measurements taken and provided by the level transmitter **156** to keep the permeate level of the permeate break tank **152** within the level threshold range as determined by the level controller **157.** In other embodiments, a weight transmitter (not shown) may be operably coupled to the permeate break tank **152** to measure the contents of the permeate break tank **152** via weight in addition to or instead of level. The weight transmitter and the level transmitter may work in tandem or separately to measure the contents of the permeate break tank **152** in various embodiments. In some situations, if the level of permeate in the permeate break tank **152** exceeds a ceiling threshold amount, permeate may be drained to waste along flow path **104c,** access to which may be facilitated by a valve **105.** If the level of permeate in the permeate break tank **152** drops below a floor threshold amount, supplemental diafiltration buffer may be added along flow path **104d,** access to which may be facilitated by a valve **107.**

A valve **162** may be positioned downstream of the pump **131** along a flow pathway **104e.** The valve **162** may be operational to allow or prohibit flow of permeate to the second output **160.** The second output **160** may be in fluid communication with a permeate supply of an upstream module of the system **100** (FIG. **1****)** as discussed above. A control valve **164** may also be positioned downstream of the pump **131** along a flow pathway **1046f.** The control valve **164** may be operational to allow or prohibit flow of permeate to waste **170** as discussed further herein. The control valve **164** may be operably coupled to a flow controller **166** and/or a flow transmitter **168** to measure and control the flow of permeate from the permeate break tank **152** to waste **170.** The flow transmitter **168** may be operable to measure the flow rate of permeate between the permeate break tank **152** and the control valve **164,** while the flow controller **166** operates the control valve **164** to maintain, decrease, or increase the flow rate as measured by the flow transmitter **168.**

As discussed above, each module **102** may be manipulated to fulfill particular processes as desired via operation of a plurality of valves, as discussed above, which close and/or open the flow paths described herein as needed. A first pathway configuration that may be consistent with an spTFF process may include fluid flow directed through flow path **104a,** flow path **108,** and each of flow paths **104b** and **106b** as necessary, so that flow path **106a** is closed in the first pathway configuration. A second pathway configuration that may be consistent with a CCBE-TFF process may include fluid flow directed through each of flow paths **104a, 106a, 108,** and each of flow paths **104b** and **106b** as necessary. A third pathway configuration allowing substantial simultaneous CCBE-TFF and spTFF processes may include fluid flow directed through flow path **104a,** flow path **106a,** flow path **108,** and each of flow paths **104b** and **106b** as necessary.

Control of the cTFF system **100** to maintain a steady-state within the system and facilitate stability and efficiency may rely at least in-part on monitoring and control of flow ratios within the system **100,** which may be established based on the desired degree of solution/buffer exchange. The desired degree of solution/buffer exchange may depend on the type of process being implemented. For instance, some processes may require an exchange efficiency between solution and buffer of almost 100% (e.g., 99.996%). Other processes may require a lower exchange efficiency, such as 99%. Lower exchange efficiency requirements are also possible. As the number of CCBE stages increases within the cTFF system **100,** the exchange efficiency may also increase, which may decrease the amount of diafiltration solution and/or buffer required.

The degree of buffer exchange required may be represented as an impurity removal value (derivation not shown). As used herein, "impurity" is being used generally to represent any species that is intended to be removed by the TFF diafiltration process. From this impurity removal value, the impurity removal factor ("a") may be calculated as a function of CCBE stages present in a system using the equation below: $FR = \frac{{C}_{F}}{{C}_{N}} = \frac{{α}^{N + 1} - 1}{α - 1}$ wherein:
*FR = impurity removal value*
*C_{F} = concentration of component in feed*
*C_{N} = concentration of component in retentate from final stage*
α = *impurity removal factor*
*N* = *number of buffer exchange stages* (*modules*)

The flow ratio of exchange buffer to the feed to the CCBE section of the cTFF system may then be calculated from the impurity removal factor using the equation below: $α = \frac{{Q}_{DF} ∗ S}{{Q}_{F}}$ wherein:
α = *impurity removal factor*
*Q_{DF} = flow rate of diafiltration buffer into the countercurrent system*
*Q_{F} = flow rate of the feed into the countercurrent system*
*S = sieving coef ficient*

It is understood that for many, but not all, tangential flow filtration processes, the sieving coefficient for small readily permeable solutes is equal to or close to 1. In the five module cTFF system as described above, the impurity removal factor is calculated as the ratio of the diafiltration buffer flow rate entering module **102e** divided by the flow rate of the product stream entering module **102b.** For purposes of process control, stage removal factor ("γ") is introduced in the present disclosure. The stage removal factor (γ) may be a ratio between any two of the following three parameters: (i) the feed flow rate, e.g., as measured by flow transmitter **132,** (ii) the permeate flow rate, and (iii) the retentate flow rate. The permeate flow rate and the retentate flow rate can be measured for each individual module using flow transmitters **154, 126** (FIG. **2****),** respectively, downstream of the filter as described above. One of the permeate flow rate and the retentate flow rate may further be calculated using at least two of flow transmitters **154, 126,** and **132** (FIG. **2****).** For example, the permeate flow rate may be calculated by subtracting the retentate flow rate measured by flow transmitter **126** (FIG. **2****)** from the feed break tank flow rate measured by flow transmitter **132** (FIG. **2****).** Similarly, the retentate flow rate may be calculated by subtracting the permeate flow rate measured by flow transmitter **154** (FIG. **2****)** from the feed break tank flow rate measured by flow transmitter **126** (FIG. **2****).**

In a CCBE-TFF process where the retentate concentration exiting each module matches the concentration of the feed material entering the CCBE-TFF module, the numerical value of the stage removal factor ("γ") and the impurity removal factor ("α") are equivalent. In modules for which a greater retentate concentration is desired, e.g., the final stage of the system, the numerical value of the stage removal factor ("γ") may be greater than the mpurity removal factor ("α"). In other words, the cTFF system may approach a steady state as the stage removal factor approaches the impurity removal factor. However, these values do not always need to be equivalent to maintain a steady state depending on the desired outcome of the cTFF system processes.

Referring again to FIG. **2****,** and as described above, gamma controller **180** is in operable communication with flow controller **133** and flow controller **127.** As described above, the gamma controller is configured to operate flow controller **127** to adjust the flow rate of flow path **106b** via flow control valve **146,** and, by resultant mass balance, flow path **104b,** which is based on the flow rate of flow path **108** as controlled by flow rate controller **133,** so that a calculated stage removal factor of each module **102** approaches a predetermined target stage removal factor setpoint. The target stage removal factor setpoint may be determined according to process requirements and how module **102** is being used. For example, if module **102** is being operated as a spTFF module only, the stage removal factor (γ) setpoint may be established based on the degree of concentration required from module **102.** If module **102** is being operated as a CCBE only module, the stage removal factor (γ) setpoint may be determined based on the desired exchange efficiency. For instance, in one exemplary non-limiting embodiment, if the stage removal factor (γ) were defined as the ratio of permeate flow rate to retentate flow rate, then the stage removal factor setpoint may be set to the impurity removal factor (α) needed to achieve the desired exchange efficiency, as calculated using the equations above and/or determined/confirmed experimentally. In a combined CCBE and additional concentration module, the stage removal factor (γ) setpoint may be set to a point that achieves both the desired amount of concentration and the desired exchange efficiency.

The predetermined target stage removal factor may be preprogrammed into the gamma controller **180,** where the predetermined target stage removal factor is the stage removal factor at which the module maintains a steady state. In other words, the gamma controller **180** may be configured to maintain the module at a steady state by automatically maintaining a substantially constant stage removal factor at or near the predetermined target stage removal factor by automatically and individually adjusting the retentate pathway **106b** via operation of the flow controllers **127** as described above. In this way, the gamma controller **180** keeps the ratio of feed flow rate, permeate flow rate, and/or retentate flow rate at a constant target steady state necessary to achieve process-specific objectives.

In some embodiments, the gamma controller **180** may also be configured to compensate for manual or automatic adjustment of pump **130** or related controllers and/or the flow control valve **146** in a manner similar to that described above. For example, if a user notices that the level within the feed break tank **110** is too high, a manual adjustment to the speed controller **134,** the pump **130,** and/or the flow controller **133** may be performed. With such adjustment, the calculated stage removal factor of the module **102** is altered. The gamma controller **180** may then operate the flow control valve **146** via flow controller **127** so that the calculated stage removal factor approaches the predetermined target stage removal factor to compensate for the manual adjustment. As such, the manual adjustments and resultant automatic adjustments may be performed without requiring shut down of the module **102** or system **100** (FIG. **1**).

In some embodiments, the gamma controller **180** may be configured to automatically adjust the flow control valve **146** according to the setpoint target of flow controller **133** of flow path **108.** As described above, the setpoint target of flow controller **133** is adjusted according to the level of the feed break tank **110** as measured by level transmitter **136.** For example, if the level transmitter **136** measures that the level within the feed break tank **110** is too high according to the level threshold of the level controller **137,** the level controller **137** may communicate this the flow controller **133.** Flow controller **133** may adjust the speed of the pump **130** via speed controller **134** in response to adjust the level of the mixture in the feed break tank **110.** With such adjustment, the calculated stage removal factor of the module **102** is altered. The gamma controller **180** may then operate the flow control valve **146** via flow controller **122** so that the calculated stage removal factor approaches the predetermined target stage removal factor to compensate for the adjustment.

In a cTFF system similar to cTFF system **100** illustrated in FIG. **1****,** the secondary concentration process of the final modules, such as fifth module **102e,** occurs by setting the target stage removal factor at a higher value than the target stage removal factor of intermediate modules **102b, 102c,** and **102d.** For example, while the stage removal factor and the flow removal factor for each of modules **102b, 102c,** and **102d** may be substantially equal, the stage removal factor for module **102e** may be greater than the flow removal factor. This is because the retentate of module **102e,** or, in systems having more than five modules, the final module, retentate is collected as a product. The permeate of the final module is split between a small waste stream, e.g., via flow path **104f,** and the permeate supply of the immediately preceding module, e.g., via flow path **104e.** The small waste stream removes excess permeate resulting from the secondary concentration of the final module, facilitated by the higher predetermined target stage removal factor. This translates to cTFF systems having a fewer or greater number of modules, in which the final module has a higher stage removal factor than intermediate modules.

As previously mentioned, a feed supply **103** to the entire cTFF system **100** may be provided to the feed supply of the first module **102a;** more specifically, the feed supply **103** may be provided to flow path **106a** of the first module **102a.** A diafiltration buffer supply **111** to the entire cTFF system **100** may be supplied to the exchange buffer or permeate supply of the last module **102e** and, more specifically, to flow path **104a.** This diafiltration buffer supply may comprise the buffer that is desired to be exchanged with the buffer currently present in the feed supply. Finished product **109** for the entire cTFF system **100** may be collected from flow path **106b** of the last module **102e.**

Steady state operation of each module **102** may be governed and generally controlled by the break tank level controllers **137** and **157** and gamma controller **180.** The maintenance of steady state operation within each module **102** of the system **100** (FIG. **1**) facilitates steady state operation of the overall system **100** (FIG. **1**). Due to the interconnection of the modules **102** within a system **100** as described and illustrated above in relation to FIG. **1****,** alteration of a total flow rate, or average flow rate through each of the flow paths **104a, 106a, 108, 104b,** and/or **106b,** of a module **102** may result in alteration of a total flow rate of the remaining modules within the system **100.**

In some cTFF systems, filters may exhibit differing filtration rates across different stages within the system. Conventionally, for single stage spTFF systems, the differing filtration rates may be compensated for by altering the total flow rate within the individual stage, e.g., running the process faster or slower by altering the flow rate within the stage to achieve the desired degree of concentration. However, in the cTFF system **100** as described herein, the flow rate cannot be altered to adjust filtration rates, as such disruption in flow rate at one stage (e.g., a stage operated by module **102b)** will disrupt the flow rate of the other stages (e.g., stages operated by modules **102a, 102c, 102d, 102e),** which disrupts steady state operation.

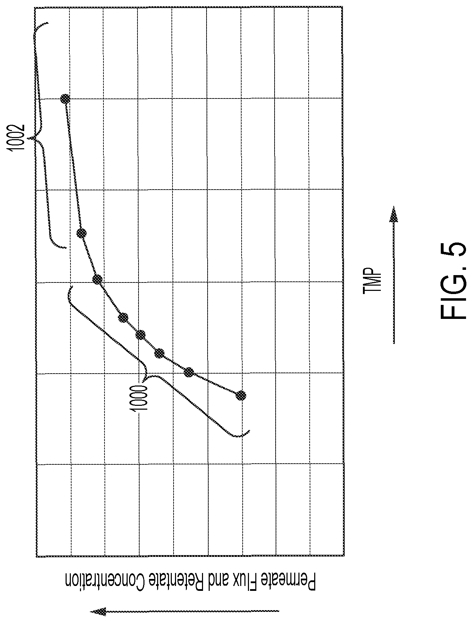

In view of the above and referring additionally to FIG. **5****,** the filter **112** of each module **102b** is operated at an operation pressure level within a region of pressure dependence, for example, region **1000,** where an increase in feed flow pressure (i.e., flow pressure measured by pressure transmitter **138)** increases the filtration rate while a decrease in operation flow pressure decreases the filtration rate. For the level controllers, the flow controllers, and the gamma controller to be successful in maintaining steady state, the transmembrane pressure changes that result from controller action must impact the filtration rate, or permeate flux, without altering the flow rate in a manner that will disrupt the steady state operation of the entire system **100.** A region of less pressure dependence is illustrated at region **1002** of FIG. **5****.** In yet other embodiments, parameters such as surface area of the filter or configuration of surface area of the filter may be manipulated at an individual stage level to affect filtration rate of a specific stage without disrupting the remaining stages or the overall system.

Generally, product collected during start-up and shut-down of continuous systems may not meet concentration or buffer exchange efficiency requirements, and such product collected during start-up or shut-down is discarded. Specific procedures may be followed to mitigate or eliminate these losses.

For example, when the system is being operated as a diafiltration system, the system is generally provided a feed supply of material comprising a solute of interest suspended in a starting solution matrix. As in any diafiltration operation, the goal of the system is to transfer the solute of interest from the starting solution matrix into an exchange buffer. In such a diafiltration system, the filters of the system may be flushed with the target exchange buffer solution prior to introducing the feed supply of material to be filtered to the system. All material collected from initial start-up to steady-state will then exceed the desired impurity removal factor as material is being overdiluted by exchange buffer already present in the system until steady-state is achieved. Since an excess of exchange buffer is typically not a cause for material rejection, the material collected from initial start-up to steady-state need not be discarded, thus reducing waste.

With respect to concentration, material collected during start-up may be less concentrated than required by process requirements. In order to compensate for this, the concentration during steady-state operation may be set to a level slightly higher than process requirements, such that combination of (i) the less-concentrated-than-required product collected during startup and (ii) the more-concentrated-than-required product collected during steady state will, together, meet the concentration specified by process requirements. Since the time required to bring the system to a steady state may be predicted mathematically and/or experimentally, and the total amount of product to be processed may be known in advance, the amount by which the steady-state concentration must exceed process requirements may be calculated based on overall mass balance. In this way, product collected during startup may not need to be discarded to waste.

### Examples

### Example 1

Operating targets for a test cTFF system were selected according to **Table 1** below:

**Table 1: Example Operating Parameter Targets**

| *Parameter* | *Units* | *Target* |
|---|---|---|
| Feed Concentration | g/L | 100 |
| Surface Area | m^2 / stage | 1x0.24 |
| # of stages | n/a | 3 |
| Alpha | n/a | 7.115 |
| Crossflow Rate (Flux) | mL/min (LMM) | 144.0 (0.6) |
| Feed/Retentate | mL/min | 17.7 |
| Diafiltration Buffer/ Permeate | mL/min | 126.3 |

Each of the tested stages, consistent with stages two through four as discussed above in relation to system **100,** were configured for CCBE processes. The feed material included a 107 g/L mAb in an aqueous buffering solution with higher conductivity. This material was prepared using a standard single module spTFF configuration prior to use in this Example 1. The following events occurred at the given time points: at 0 minutes, a buffer flush was performed; at 9 minutes, the processing began with introduction of mAb feed material; at 320 minutes, the processing ended with a second buffer flush; at 330 minutes, a water flush was performed; at 340 minutes, a cleaning flush was performed; and at 350 minutes, shut-down of the test cTFF system was completed.

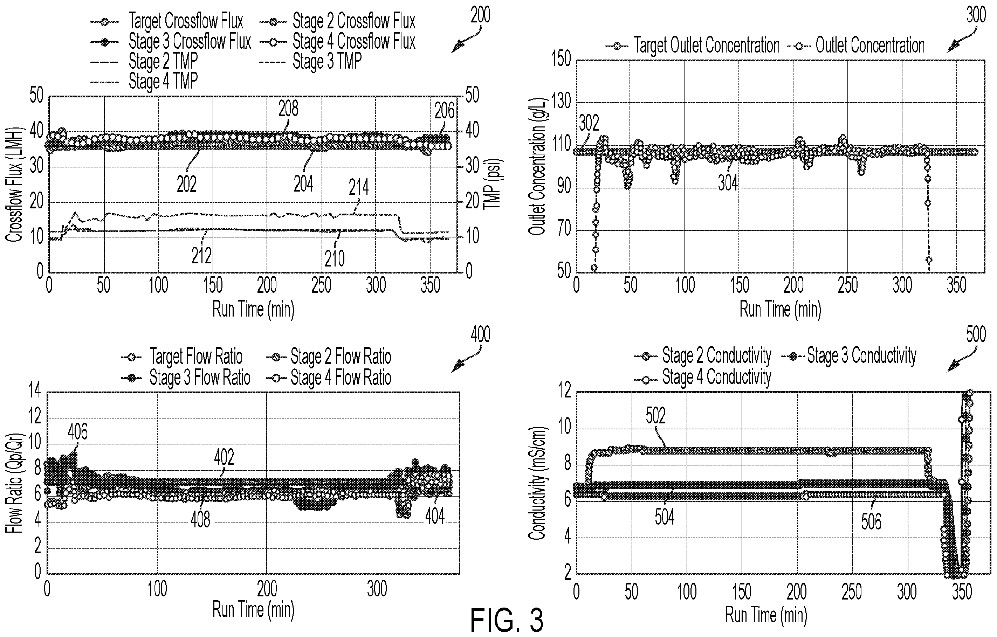

FIG. 3 illustrates the parameters monitored to assess steady-state operation and the measurement of said parameters over the time of the experimental operation. Image **200** illustrates the crossflow flux and transmembrane pressure (i.e., the difference between the average feed/retentate-side pressure and the average permeate side pressure across the filter) for each stage over run time of each stage, wherein line **202** illustrates the target crossflow flux, line **204** illustrates the crossflow flux of stage two, line **206** illustrates the crossflow flux of stage three, and line **208** illustrates the crossflow flux of stage four. Line **210** illustrates the transmembrane pressure of stage two, line **212** illustrates the transmembrane pressure of stage three, and line **214** illustrates the transmembrane pressure of stage four.

Image **300** illustrates the outlet concentration in g/L as compared to the target outlet concentration, wherein line **302** illustrates the target outlet concentration and line **304** illustrates the achieved outlet concentration. Image **400** illustrates the flow ratio, or ratio of the permeate flow rate to the retentate flow rate, for each stage, wherein line **402** illustrates the target flow ratio, line **404** illustrates the flow ratio of stage two, line **406** illustrates the flow ratio of stage three, and line **408** illustrates the flow ratio of stage four. Image **500** illustrates the conductivity of each stage, wherein line **502** illustrates the conductivity of stage two, line **504** illustrates the conductivity stage three, and line **506** illustrates the conductivity of stage four

Stable steady-state operation was achieved for over 5 and a half hours, wherein only minor flow rate adjustments were needed every 30-60 minutes. As shown in images **200** and **400,** the crossflow rate and flow ratios remained stable near target values for the duration of the run. The conductivity dropped across stages two through four as shown in image **500,** which was expected to demonstrate the occurrence of buffer exchange. At the conclusion of stage four, retentate product was collected with an overall concentration of 108 g/L, including pre-steady state and post-steady state material that was pooled with the steady-state retentate, demonstrating that the feed concentration was similar to the outlet concentration across the three CCBE modules as expected for modules operating in buffer exchange mode only.

### Example 2

Operating targets for a test cTFF system were selected according to **Table 2** below:

**Table 2: Operating Parameter Targets**

| *Parameter* | *Units* | *Target* |
|---|---|---|
| Feed Concentration | g/L | 250 |
| Surface Area | m^2 / stage | 1x0.24 |
| # of stages | n/a | 1 |
| Alpha | n/a | 7.115 |
| Crossflow Rate (Flux) | mL/min (LMM) | 72.0 (0.3) |
| Feed/Retentate | mL/min | 8.9 |
| Diafiltration Buffer | mL/min | 63.1 |
| Permeate | mL/min | 67.3 |

The tested stage, consistent with stage five as discussed above in relation to system **100,** was configured for simultaneous CCBE and spTFF (i.e., secondary concentration processes). The feed material included a 108 g/L mAb in an aqueous buffering solution. The following events occurred at the given time points: at 0 minutes, a buffer flush was performed; at 1 minute, the processing began with introduction of mAb feed material; at 170 minutes, the processing ended with a second buffer flush; at 188 minutes, a water flush was performed; at 200 minutes, a cleaning flush was performed; and at 210 minutes, shut-down of the test cTFF system was completed.

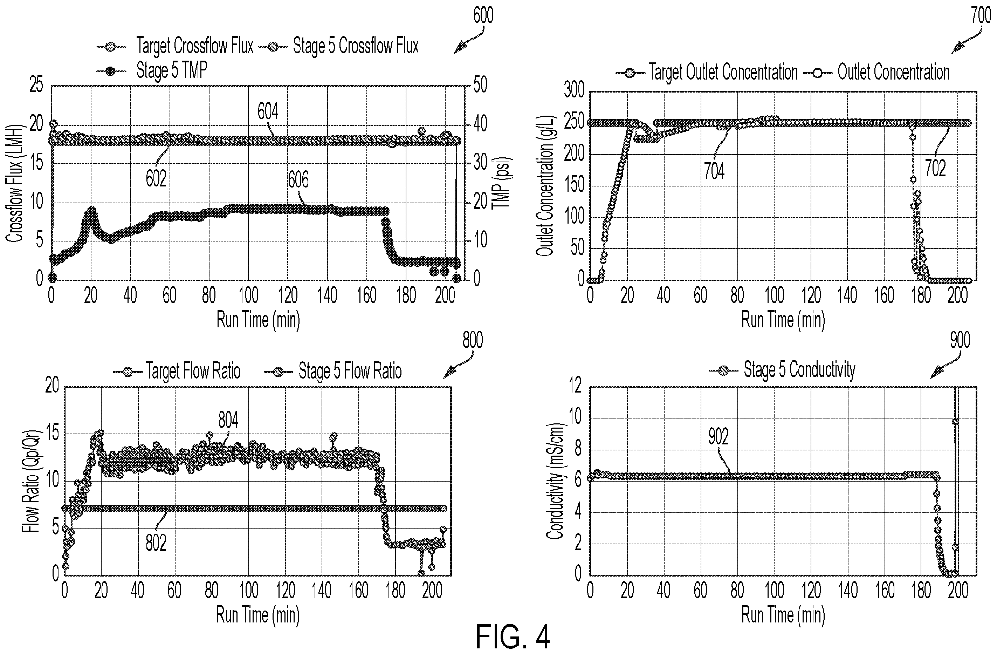

FIG. **4** illustrates the parameters monitored to assess steady-state operation and the measurement of said parameters over the time of the experimental operation. Image **600** illustrates the crossflow flux and transmembrane pressure (i.e., the difference between the average feed/retentate-side pressure and the average permeate-side pressure across the filter) for the stage over run time of the stage, wherein line **602** illustrates the target crossflow flux and line **604** illustrates the crossflow flux of stage five. Line **606** illustrates the transmembrane pressure of stage five.

Image **700** illustrates the outlet concentration in g/L as compared to the target outlet concentration, wherein line **702** illustrates the target outlet concentration and line **704** illustrates the achieved outlet concentration. Image **800** illustrates the flow ratio of stage five as compared to the target flow ratio, or ratio of the crossflow flow rate to the retentate flow rate, wherein line **802** illustrates the target flow ratio for the buffer exchange and line **804** illustrates the flow ratio of stage five. The flow ratio is higher than the target because this is a combined CCBE and spTFF stage, as previously explained. Image **900** illustrates the conductivity of stage five, wherein line **902** illustrates the conductivity of stage five.

Stable steady-state operation was achieved for nearly three hours. Only minor flow rate adjustments were needed every 30-60 minutes. As shown in images **600** and **800,** the crossflow rate, flow ratio, concentration, and conductivity were stable for the duration of the run.

While this invention has been described as having exemplary designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

### ADDITIONAL ASPECTS OF THE DISCLOSURE

The present invention provides the following:
1. A tangential flow filtration module, the module comprising:
   a flow supply comprising a module exchange buffer supply and a module feed supply;
   a feed break tank positioned downstream of the flow supply, the feed break tank including a powered agitator; and
   a first filter positioned downstream of the feed break tank.
2. The tangential flow filtration module of aspect 1, further comprising a feed pump positioned between the feed break tank and the first filter, the feed pump configured to control a flow rate of a flow between the feed break tank and the first filter.
3. The tangential flow filtration system of aspect 1, wherein operation of the powered agitator is configured to create a homogenous solution.
4. The tangential flow filtration system of aspect 1, wherein the feed break tank defines an air gap.
5. The tangential flow filtration system of aspect 1, wherein the feed break tank defines a vent in fluid communication with ambient pressure.
6. The tangential flow filtration system of aspect 1, further comprising a permeate break tank positioned downstream of the first filter.
7. The tangential flow filtration system of aspect 1, wherein the module exchange buffer supply is comprised of permeate of a second filter positioned downstream of the first filter, a feed supply of the second filter comprising retentate of the first filter.
8. The tangential flow filtration module of aspect 1, wherein the module feed supply is comprised of retentate of a third filter positioned upstream of the first filter.
9. A tangential flow filtration module, the module comprising:
   a flow supply comprising a module exchange buffer supply and a module feed supply;
   a filter positioned downstream of the flow supply and having two outputs, including a permeate output and a retentate output; and
   a permeate break tank positioned downstream of the filter and supplied by the permeate output of the filter.
10. The tangential flow filtration module of aspect 9, further comprising a feed break tank positioned between the flow supply and the filter.
11. The tangential flow filtration system of aspect 9, wherein an interior of the permeate break tank defines an air gap.
12. The tangential flow filtration system of aspect 9, wherein the permeate break tank includes a vent in fluid communication with ambient pressure.
13. The tangential flow filtration system of aspect 9, further comprising a valve positioned between the first filter and the permeate break tank, the valve configured to control permeate pressure on the permeate side of the first filter.
14. The tangential flow filtration system of aspect 9, wherein the permeate break tank supplies a second filter positioned upstream of the feed supply.
15. The tangential flow filtration module of aspect 14, wherein the feed supply is comprised of retentate of the second filter.
16. The tangential flow filtration system of aspect 9, wherein the module exchange buffer supply is comprised of permeate of a third filter positioned downstream of the first filter, a feed supply of the third filter comprising retentate of the first filter.
17. The tangential flow filtration module of aspect 9, further comprising at least one valve, wherein operation of the valve is configured to change:
   a configuration of the tangential flow filtration module from a first flow path configuration to a second flow path configuration; or
   a configuration of the tangential flow filtration module from the second flow path configuration to a first flow path configuration;
   wherein the first flow configuration is a counter-current buffer exchange flow path configuration; and
   wherein the second flow configuration is a single-pass tangential flow filtration flow path configuration.
18. A tangential flow filtration system, the tangential flow filtration system comprising:
   a plurality of individual modules, each of said individual modules configured to perform a process associated with tangential flow filtration, wherein each individual module includes:
   a plurality of valves, wherein actuation of the plurality of valves is configured to alter a flow path of the corresponding individual module; and
   a control system configured to:
      calculate a current stage removal factor for the individual module, the current stage removal factor being a ratio between any two of a permeate flow rate, a feed flow rate, and a retentate flow rate for the individual module; and
      automatically operate the plurality of valves to alter the flow path so that the current stage removal factor for the individual module approaches a target stage removal factor.
19. The tangential flow filtration system of aspect 18, wherein the plurality of individual modules includes at least five modules.
20. The tangential flow filtration system of any of aspects 18-19, wherein a last individual module of the plurality of individual modules has a different target stage removal factor than at least one other individual module of the plurality of individual modules.
21. The tangential flow filtration system of aspect 18, wherein the control system is configured to maintain the tangential flow filtration system in a steady state in which the current stage removal factor approaches the target stage removal factor.
22. The tangential flow filtration system of aspect 21, wherein:
   the system is configured to allow a user to adjust, when the tangential flow filtration system is in the steady state, at least one valve of the plurality of valves in a way that causes the current stage removal factor to diverge from the target stage removal factor; and
   the control system is configured to automatically operate remaining valves of the plurality of valves to compensate for the user's adjustment such that the current stage removal factor again approaches the target stage removal factor after the user's adjustment.
23. The tangential flow filtration system of aspect 21, wherein each of the plurality of individual modules comprises:
   a feed break tank positioned downstream of a flow supply and upstream of the filter for the individual module, the flow supply comprising a module feed supply and a module exchange buffer supply; and
   a permeate break tank positioned downstream of the filter;
   wherein a first flow rate output of the feed break tank and a second flow rate output of the permeate break tank are individually adjustable during operation of the tangential flow filtration system; and
   wherein the control system is configured to maintain the tangential flow filtration system in a steady state by automatically maintaining a substantially constant stage removal factor during adjustment of either of the first flow rate output or the second flow rate output.
24. The tangential flow filtration system of aspect 23, wherein the control system is further configured to maintain a constant level within the feed break tank and a constant level within the permeate break tank.
25. A tangential flow filtration system, the system comprising:
   a plurality of modules, each module comprising:
   a module flow supply;
   a filter positioned downstream of the module flow supply; and
   at least one of:
      a feed break tank positioned between the module flow supply and the filter; and
      a permeate break tank positioned downstream of the filter.
26. The tangential flow filtration of aspect 25, wherein each module has at least one of a first configuration corresponding to a single-pass tangential flow filtration ("spTFF") process, a second configuration corresponding to a counter-current buffer exchange tangential flow filtration ("CCBE-TFF") process, and a third configuration corresponding to a combined spTFF and CCBE-TFF process.
27. The tangential flow filtration system of aspect 26, wherein each module of the plurality of modules includes a plurality of valves so that each module of the plurality of modules is capable of selectively switching from the first configuration to at least one of the second configuration and the third configuration, selectively switching from the second configuration to at least one of the first configuration and the third configuration, and selectively switching from the third configuration to at least one of the first configuration and the second configuration.
28. The tangential flow filtration system of aspect 26, wherein a first module of the plurality of modules is in the first configuration and a second module of the plurality of modules is in the second configuration.
29. The tangential flow filtration system of aspect 28, wherein a first plurality of modules including the first module are in the first configuration and a second plurality of modules including the second module are in the second configuration.
30. The tangential flow filtration system of aspect 26, wherein a last module of the plurality of modules is operated in the third configuration.
31. The tangential flow filtration system of aspect 30, wherein at least some permeate from the last module is supplied to a module exchange buffer supply for another module upstream to the last module, and at least some permeate from the last module is sent to waste.
32. The tangential flow filtration system of aspect 25, wherein each module of the plurality of modules includes a retentate flow path and a permeate flow path, and wherein the permeate break tank is positioned along the permeate flow path.
33. The tangential flow filtration system of aspect 25, further comprising at least five modules.
34. The tangential flow filtration system of aspect 25, wherein a first module of the plurality of modules includes a system feed supply, and a last module of the plurality of modules includes a system buffer exchange supply.
35. The tangential flow filtration system of aspect 25, wherein the system is configured to operate as a diafiltration system that transfers a solute of interest from within a feed supply from a starting solution matrix into an exchange buffer, and wherein the system is configured to flush the filter of each modules with the exchange buffer before starting to filter the feed supply.
36. The tangential flow filtration system of aspect 25, wherein the system is configured to compensate for outputting product during system start-up with a concentration that is lower than process requirements by outputting product during steady-state with a concentration that is higher than process requirements, such that a mixture of product output during start-up and product output during steady-state has a concentration that meets the process requirements.

## Claims

1. A tangential flow filtration system, the system comprising:
a plurality of modules, each module comprising:
a module flow supply;
a filter positioned downstream of the module flow supply; and
at least one of:
a feed break tank positioned between the module flow supply and the filter; and
a permeate break tank positioned downstream of the filter;
wherein each module has at least one of a first configuration corresponding to a single-pass tangential flow filtration ("spTFF") process, a second configuration corresponding to a counter-current buffer exchange tangential flow filtration ("CCBE-TFF") process, and a third configuration corresponding to a combined spTFF and CCBE-TFF process.

2. The tangential flow filtration system of claim 1, wherein each module of the plurality of modules includes a plurality of valves so that each module of the plurality of modules is capable of selectively switching from the first configuration to at least one of the second configuration and the third configuration, selectively switching from the second configuration to at least one of the first configuration and the third configuration, and selectively switching from the third configuration to at least one of the first configuration and the second configuration.

3. The tangential flow filtration system of claim 1, wherein a first module of the plurality of modules is in the first configuration and a second module of the plurality of modules is in the second configuration.

4. The tangential flow filtration system of claim 3, wherein a first plurality of modules including the first module are in the first configuration and a second plurality of modules including the second module are in the second configuration.

5. The tangential flow filtration system of claim 1, wherein a last module of the plurality of modules is operated in the third configuration.

6. The tangential flow filtration system of claim 5, wherein at least some permeate from the last module is supplied to a module exchange buffer supply for another module upstream to the last module, and at least some permeate from the last module is sent to waste.

7. The tangential flow filtration system of claim 1, wherein each module of the plurality of modules includes a retentate flow path and a permeate flow path, and wherein the permeate break tank is positioned along the permeate flow path.

8. The tangential flow filtration system of claim 1, further comprising at least five modules.

9. The tangential flow filtration system of claim 1, wherein a first module of the plurality of modules includes a system feed supply, and a last module of the plurality of modules includes a system buffer exchange supply.

10. The tangential flow filtration system of claim 1, wherein the system is configured to operate as a diafiltration system that transfers a solute of interest from within a feed supply from a starting solution matrix into an exchange buffer, and wherein the system is configured to flush the filter of each modules with the exchange buffer before starting to filter the feed supply;
optionally wherein the solute of interest is a monoclonal antibody (mAB), suspended within a starting solution matrix.

11. The tangential flow filtration system of claim 1, wherein the system is configured to compensate for outputting product during system start-up with a concentration that is lower than process requirements by outputting product during steady-state with a concentration that is higher than process requirements, such that a mixture of product output during start-up and product output during steady-state has a concentration that meets the process requirements.

12. The tangential flow system of claim 2, wherein:
a) the module flow supply comprises a module exchange buffer supply and a module feed supply;
b) each module of the plurality of modules comprises a feed break tank positioned between the module flow supply and the filter, wherein the feed break tank includes a powered agitator;
c) each module of the plurality of modules comprises a permeate break tank positioned downstream of the filter;
d) each module of the plurality of modules includes a retentate flow path and a permeate flow path, and wherein the permeate break tank is positioned along the permeate flow path; and
e) each module of the plurality of modules comprises a control system configured to;
i) selectively switch the module from the first configuration to at least one of the second configuration and the third configuration, selectively switch from the second configuration to at least one of the first configuration and the third configuration, and selectively switch from the third configuration to at least one of the first configuration and the second configuration, and
ii) calculate a current stage removal factor for the module and automatically operate the plurality of valves to alter the flow path so that the current stage removal factor for the module approaches a target stage removal factor, wherein the current stage removal factor is a ratio between any two of a permeate flow rate, a feed flow rate, and a retentate flow rate for the module.

13. The tangential flow system of claim 12, wherein:
a) the last module of the plurality of modules has a different target stage removal factor than at least one other module of the plurality of modules; and/or
b) the control system is configured to maintain the tangential flow filtration system in a steady state in which the current stage removal factor approaches the target stage removal factor; and/or
c) the system is configured to allow a user to adjust, when the tangential flow filtration system is in the steady state, at least one valve of the plurality of valves in a way that causes the current stage removal factor to diverge from the target stage removal factor, and the control system is configured to automatically operate remaining valves of the plurality of valves to compensate for the user's adjustment such that the current stage removal factor again approaches the target stage removal factor after the user's adjustment; and/or
d) the control system is configured to maintain a constant level within the feed break tank and a constant level within the permeate break tank.

14. The tangential flow system of claim 12, wherein:
a) operation of the powered agitator is configured to create a homogenous solution; and/or
b) the feed supply of each module comprises the permeate from another module positioned upstream of the filter.

15. The tangential flow system of claim 1, wherein:
a) each module of the plurality of modules comprises a feed break tank positioned between the module flow supply and the filter and:
i) further comprises a feed pump positioned between the feed break tank and the filter, optionally wherein the feed pump is configured to control a flow rate of a flow between the feed break tank and the first filter; and/or
ii) the feed break defines an air gap; and/or
iii) the feed break tank defines a vent in fluid communication with ambient pressure; and/or
b) each module of the plurality of modules comprises a permeate break tank positioned downstream of the filter and:
i) further comprises a valve positioned between the filter and the permeate break tank, wherein the valve is configured to control permeate pressure on the permeate side of the filter; and/or
ii) the permeate break tank supplies a module exchange buffer to another tangential flow filtration module positioned upstream of the module feed supply.
